# EUROPÄISCHE PATENTSCHRIFT

(11) **EP 3 598 255 B1**
(45) Veröffentlichungstag und Bekanntmachung des Hinweises auf die Patenterteilung: **26.01.2022**
(21) Anmeldenummer: 18183958.0
(22) Anmeldetag: 17.07.2018
(51) Int. Cl.: G05B 19/418, H04L 12/24

(54) **ANORDNUNG MIT OPERATOR-SERVERN UND MIT OPERATOR-CLIENTS**
ARRANGEMENT WITH OPERATOR SERVERS AND WITH OPERATOR CLIENTS
SYSTÈME POURVU D'OPÉRATEURS SERVEURS ET D'OPÉRATEURS CLIENTS

(43) Veröffentlichungstag der Anmeldung: 22.01.2020
(73) Patentinhaber: Siemens Aktiengesellschaft, 80333 München (DE)
(72) Erfinder: Engert, Ralf, 76185 Karlsruhe (DE); Hoffmann, Markus, 76829 Landau (DE); Lutz, Benjamin, 76327 Pfinztal (DE)

(56) Entgegenhaltungen:
- EP-A1- 3 115 855
- EP-A1- 3 276 437

## Beschreibung

Die Erfindung betrifft eine Anordnung mit Operator-Servern und mit Operator-Clients gemäß dem Oberbegriff des Anspruchs 1.

Eine derartige Anordnung ist aus dem Siemens-Katalog "ST PCS7", Kapitel 5, Ausgabe 2017 bekannt. Diese Anordnung, welche Bestandteil eines Prozessleitsystems ist, weist eine Vielzahl von Operator-Servern und Operator-Clients auf und ist dazu ausgebildet, eine komfortable und sichere Prozessführung zu ermöglichen, wobei ein Operator sowohl den Prozessablauf beobachten als auch bei Bedarf steuernd eingreifen kann.

Gewöhnlich sind in der Prozessleittechnik hunderte von Anlagenbildern und mehrere tausend Prozessobjekte, z. B. Prozessobjekte in Form von Messstellen, Tanks, Ventile, Sensoren, Aktuatoren, zu bearbeiten, wobei ein Prozessobjekt mehrere zusammengehörige Facetten aufweist. Beispielsweise umfasst ein auf Operator-Servern hinterlegtes Prozessabbild zu diesen Prozessobjekten gehörige Prozessabbild-Bausteine bzw. bedienund beobachtungsrelevante Prozessdaten dieser Prozessobjekte, ein Automatisierungsgerät zu den Prozessobjekten gehörige Automatisierungsbausteine bzw. Steuerbausteine (CFCs, SFCs, ...) und ferner ein User-Interface der Operator-Clients zu den Prozessobjekten gehörige Bild- und/oder Blocksymbole eines Anlagenbildes sowie so genannte Faceplates.

In der Regel bilden jeweils ein Operator-Server und ein Operator-Client ein Operator-System, allerdings "verschwindet" durch die Anwendung von Web-Technologien - insbesondere in der Verfahrenstechnik - zunehmend die starre Client-Server-Verbindung. Dies bedeutet, dass für das Bedienen und Beobachten sich web-orientierte Clients nahezu mit jedem Operator-Server verbinden können. Die für die Bedienung und Beobachtung notwendigen Prozessdaten (Prozessvariablen, Prozesswerte, Tags, Tag-Adressen, ...) zur Dynamisierung der Anlagenbilder werden dem Operator-Client, welcher sich an einem der Operator-Server angemeldet hat, dadurch bereitgestellt, indem dieser als lokaler Server fungierende Operator-Server von weiteren als Remote-Server fungierenden Operator-Servern Prozessdaten bezieht und dieser lokale Server seine Prozessdaten zusammen mit den von den Remote-Servern bezogenen Prozessdaten dem angemeldeten Operator-Client zur Aufbereitung übermittelt.

Es kann vorkommen, dass zur Aktualisierung eines Anlagenbildes der lokale Server fast alle für das geöffnete Anlagenbild benötigten Prozessdaten von den Remote-Servern beziehen muss. In diesem Fall erhöht sich eine so genannte Querkommunikationslast zwischen dem lokalen Server und den Remote-Servern, die Antwortzeiten sowie die Bildaufschlagszeiten verschlechtern sich und darüber hinaus vermindert sich serverseitig die "Notfallreserve", um im Falle einer Havarie geeignet reagieren zu können.

In der EP 3 276 437 A1 ist ein Verfahren zum Betreiben eines Automatisierungssystems einer technischen Anlage mit einem Bedien- und Beobachtungssystem mit zumindest einem Client und zwei Servern offenbart.

Die EP 3 115 855 A1 offenbart ein Verfahren für den Betrieb einer prozesstechnischen Anlage, die zumindest eine erste Automatisierungsstation und eine zweite Automatisierungsstation, sowie zumindest einen ersten OS-Server und zumindest einen zweiten OS-Server und eine Operatorstation umfasst.

Der Erfindung liegt daher die Aufgabe zugrunde, eine Anordnung gemäß dem Oberbegriff des Patentanspruchs 1 zu schaffen, mittels der im Rahmen der Aktualisierung eines Anlagenbildes ein Operator auf die Kommunikations-Belastung zwischen den Operator-Servern hingewiesen wird.

Diese Aufgabe wird durch die im kennzeichnenden Teil des Patentanspruchs 1 angegebenen Maßnahmen gelöst.

Die Erfindung geht von der Idee aus, zu ermitteln, wie viele Prozessdaten zur Aktualisierung der Blocksymbole auf dem lokalen Operator-Server - der Server, an welchem sich ein Client angemeldet hat - und wie viele derartiger Prozessdaten auf den Remote-Servern - die Server, welche ihre Prozessdaten dem lokalen Server zuführen bzw. bereitstellen - hinterlegt sind. Für den Fall, dass auf dem lokalen Server nur wenige Prozessdaten und auf den Remote-Servern viele derartiger Prozessdaten zur Aktualisierung der Blocksymbole hinterlegt sind, so ist die Querkommunikationslast zwischen dem lokalen Server und den Remote-Operator-Servern hoch, weil der lokale Operator-Server die vielen Prozessdaten der Remote-Operator-Server zunächst beziehen muss, um schließlich alle Prozessdaten - die des lokalen Servers und die der Remote-Servern - dem angemeldeten Operator-Client übermitteln zu können. Die hohe Querkommunikationslast bedeutet eine ungünstige Client-Server-Verbindung. Dem angemeldeten Operator-Client wird angezeigt bzw. gemeldet, dass eine günstigere Client-Server-Verbindung aufgebaut werden kann. Dem Operator-Client wird somit vorgeschlagen, sich an dem Remote-Operator-Server anzumelden, auf welchem die meisten Prozessdaten hinterlegt sind, wodurch im Falle einer Anmeldung an diesem Remote-Server die Querkommunikationslast vermindert werden würde.

Vorteilhaft ist, dass "anlagenbildgranular" bzw. "bildindividuell" die Client-Server Verbindung ermittelt werden kann, die den geringsten Server-Kommunikationsquerverkehr verursacht und somit zur geringsten serverseitigen Last führt.

In einer Ausgestaltung der Erfindung gemäß den im Anspruch 2 angegebenen Maßnahmen meldet sich der angemeldete Operator-Client in Abhängigkeit der Anzahl der Tags oder Tag-Adressen der Prozessabbild-Bausteine nach einer vorgegebenen Zeitspanne oder nach einer Operator-Eingabe an einem der Remote-Server zum Aufbau einer neuen Client-Server-Verbindung an, wobei dieser Remote-Server nach der Anmeldung als neuer lokaler Server fungiert. Dadurch wird eine günstigere Client-Server-Verbindung bewerkstelligt, wodurch die Kommunikations- bzw. Querkommunikationslast zwischen den Operator-Servern gering gehalten wird. Dies ist insbesondere für Anlagenbilder auf Großbildleinwänden oder für lang anstehende und zu aktualisierende Übersichtsbildern vorteilhaft, weil in diesen Fällen eine sehr hohe Anzahl von Blocksymbolen zu aktualisieren ist. Dadurch wird, z. B. für Ausnahmesituationen, eine maximale "Notfallreserve" serverseitig vorgehalten, wobei darüber hinaus die Laufzeitstabilität eines Prozessleitsystems verbessert wird. Ein spezielles Engineering ist dazu nicht erforderlich.

In einer weiteren Ausgestaltung der Erfindung gemäß den im Anspruch 3 angegebenen Maßnahmen sind die Client-Server-Verbindungen auf dem angemeldeten Operator-Client visualisierbar. Dadurch wird ein Operator visuell auf eine günstige sowie ungünstige Server-Client-Verbindung hingewiesen, wobei der Operator mittels einer Operator-Eingabe bewirkt, dass der Operator-Client sich an dem Operator-Server mit der günstigsten Client-Server-Verbindung anmeldet.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen in einer vereinfachten Form:
- Figuren 1 und 2: Bestandteile eines Prozessleitsystems,
- Figur 3: Blocksymbole eines Anlagenbildes,
- Figur 4: ein Sequenz- bzw. Interaktionsdiagramm,
- Figur 5: ein Anlagenbild und
- Figuren 6 und 7: Visualisierungen von Client-Server-Verbindungen.

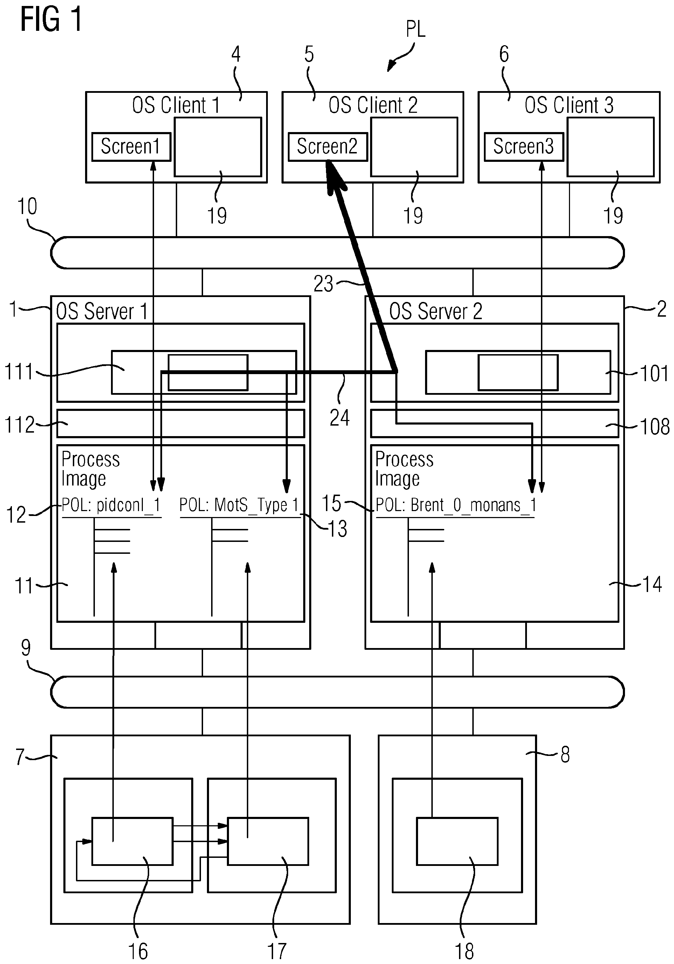

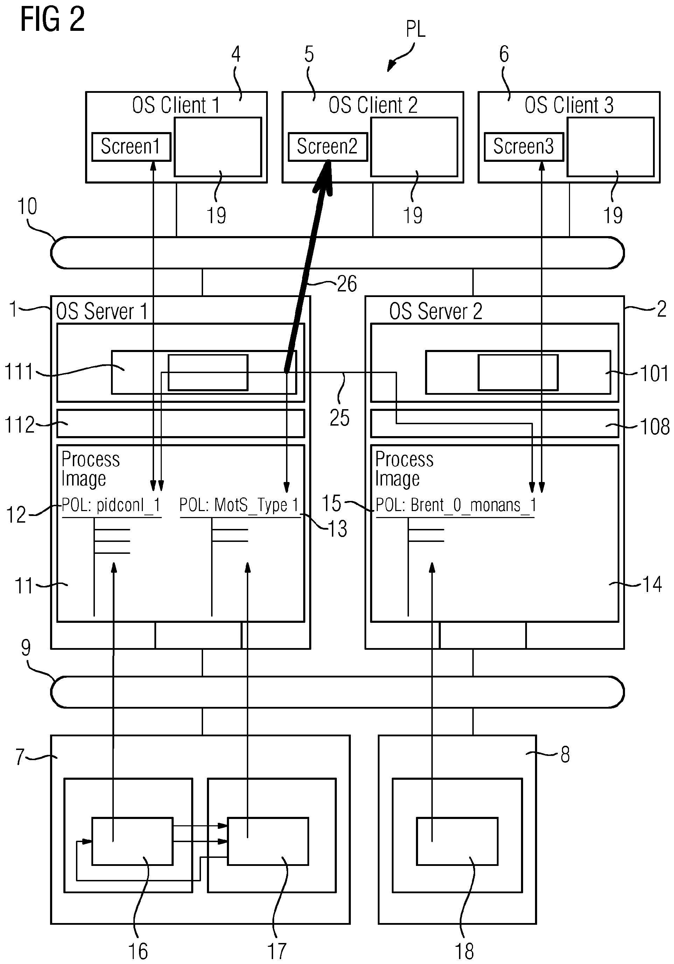

In den Figuren 1 und 2 sind mit PL Bestandteile eines Prozessleitsystems bezeichnet, welches im vorliegenden Ausführungsbeispiel ein erster Operator-Server 1 (OS Server 1), ein zweiter Operator-Server 2 (OS Server 2), drei Operator-Clients 4, 5, 6 (OS Client 1, OS Client 2, OS-Client 3) sowie zwei Automatisierungsgeräte 7, 8 umfasst. Das Prozessleitsystem PL kann selbstverständlich eine Vielzahl von Automatisierungsgeräten aufweisen, die einerseits über einen Plant-Bus 9 mit den Operator-Servern 1, 2 und andererseits über einen weiteren hier nicht dargestellten Bus mit hier ebenfalls nicht dargestellten dezentralen Peripherien verbunden sind. An diese dezentralen Peripherien sind eine Vielzahl von Feldgeräten (Sensoren, Aktuatoren) angeschlossen. Ferner sind im vorliegenden Beispiel lediglich zwei Operator-Server 1, 2 und drei Operator-Clients 4, 5, 6 dargestellt. Selbstverständlich kann das Prozessleitsystem PL weitere Operator-Server sowie weitere Operator-Clients aufweisen, wobei die Operator-Server 1, 2 und die Operator-Clients 4, 5, 6 an einen Terminal-Bus 10 angeschlossen sind.

Ein Prozessobjekt weist - wie eingangs erläutert - mehrere zusammengehörige Facetten auf. So weist im vorliegenden Ausführungsbeispiel ein Prozessabbild 11 des ersten Operator-Servers 1 ein Prozessobjekt bzw. eine Prozessobjekt-Instanz 12 eines PID-Reglers sowie ein Prozessobjekt 13 für einen Motor auf. Ferner ist ein Prozessabbild 14 des zweiten Operator-Servers 2 mit einem Prozessobjekt 15 für einen weiteren Motor versehen. Das Automatisierungsgerät 7 weist zu diesen Prozessobjekten 12, 13 gehörige Automatisierungs- bzw. Steuer-Bausteine 16, 17 und das Automatisierungsgerät 8 zu dem Prozessobjekt 15 gehörige Automatisierungs- bzw. Steuer-Baustein 18 auf. Darüber hinaus sind die Operator-Clients 4, 5, 6 jeweils mit einem User-Interface versehen, die zu diesen Prozessobjekten gehörige Faceplates und Blocksymbole 19 eines oder mehrerer Anlagenbilder aufweisen, wobei Blocksymbole eines Anlagenbildes zur Prozessbeobachtung und die Faceplates eines Anlagenbildes zur Prozessführung bzw. Prozessbedienung vorgesehen sind. Die Block-Symbole zeigen während der Prozesssteuerung aktuelle Prozesswerte zu Prozessvariablen, Parameter und Alarmkennzeichnungen der Prozessobjekte an, wobei im Rahmen der Prozessführung mittels der Faceplates (Soll-)Parameter der Prozessobjekte eingegeben bzw. geändert und/oder gelöscht werden können.

Dem Operator-Client 4, 5, 6, welcher sich an einem der Operator-Server 1, 2 angemeldet hat, werden die aktuellen Prozessdaten der Prozessobjekte durch diesen Operator-Server zugeführt, wobei die aktuellen Prozessdaten durch die Automatisierungsgeräte 7, 8 den Operator-Servern 1, 2 zur Hinterlegung in den zu den Prozessobjekten gehörigen Prozessabbild-Bausteinen 12, 13, 15 der Prozessabbilder 11, 14 übermittelt werden.

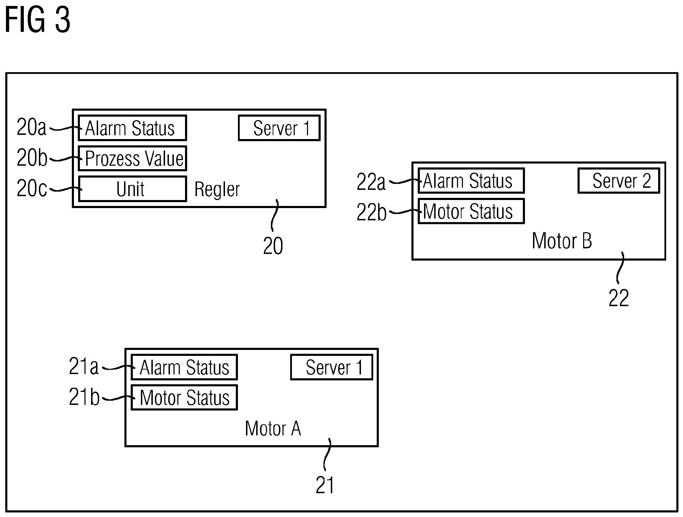

Es wird im Folgenden angenommen, dass der Operator-Client 5 sich an dem zweiten Operator-Server 2 zur Aktualisierung von Blocksymbolen 20, 21, 22 (Figur 3) eines Anlagenbildes angemeldet hat. Aufgrund dieser Anmeldung fungiert der zweite Operator 2 als lokaler (Operator-) Server und der erste Operator-Server 1 als Remote-(Operator-) Server. Wie erläutert weist der Remote-Server 1 die Prozessabbild-Bausteine 12, 13 und der lokale Server 2 den Prozessabbild-Baustein 15 auf. Dies bedeutet, dass der lokale Server 2 die in den Prozessabbild-Bausteinen 12, 13 hinterlegten aktuellen Prozessdaten zunächst von dem Remote-Server 1 beziehen muss, um schließlich diese Prozessdaten und die Prozessdaten seines Prozessabbild-Bausteines 15 dem Operator-Client 5 bereitstellen bzw. zuführen zu können, was in der Figur 1 durch einen "breiten" Kommunikationsbalken 23 angedeutet ist. Aufgrund dessen, dass die Anzahl der Prozessdaten der Prozessabbild-Bausteine 12, 13 des Remote-Servers 1 höher ist als die Anzahl der Prozessdaten des Prozessabbild-Bausteines 15 des lokalen Servers 2 ist die Kommunikations- bzw. Querkommunikationslast zwischen dem Remote Server 1 und dem lokalen Server 2 hoch, was in der Figur 1 durch einen breit dargestellten Kommunikationsbalken 24 veranschaulicht wird.

Diese hohe Querkommunikationslast zwischen dem Remote-Server 1 und dem lokalen Server 2 weist auf eine ungünstige Client-Server-Verbindung hin, eine Verbindung zwischen dem Operator-Client 5 und dem Remote-Server 1 wäre - wie im Folgenden noch gezeigt wird - im Hinblick auf die Querkommunikationslast die bessere Wahl.

Um im Rahmen der Aktualisierung bzw. Dynamisierung der Blocksymbole eines Anlagenbildes ein Operator auf die Kommunikations-Belastung zwischen den Operator-Servern hinzuweisen, ermittelt der als lokaler Server fungierende Operator-Server für die Blocksymbole aus einer Datenstruktur des Anlagenbildes die Anzahl der auf den Operator-Servern hinterlegten Prozessdaten. Es wird also geprüft, auf welchen der Operator-Server die meisten Prozessdaten hinterlegt sind, wobei dem angemeldeten Operator-Client das Ergebnis dieser Prüfung zugeführt wird.

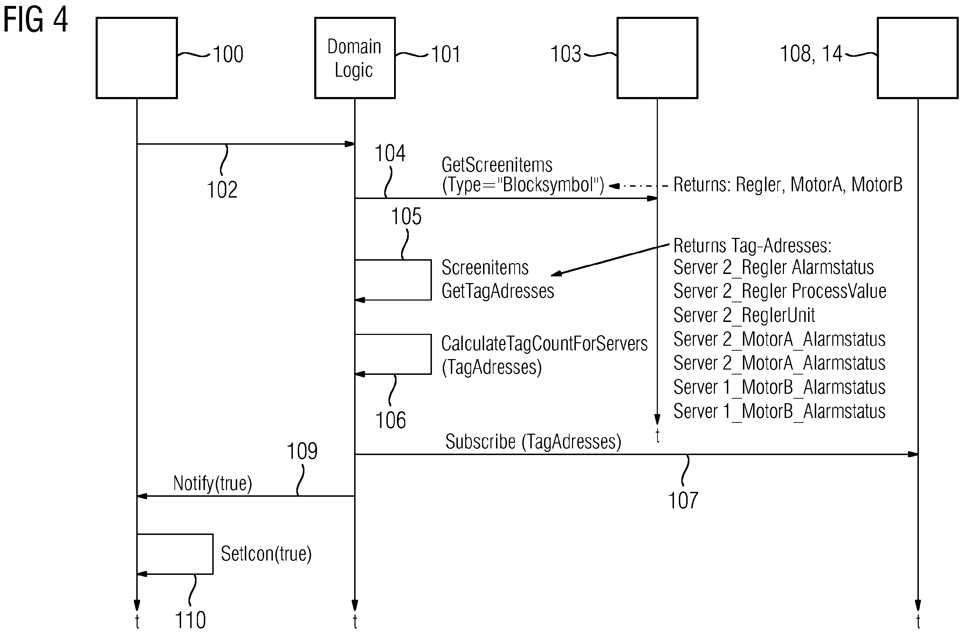

Zur näheren Erläuterung wird im Folgenden auf Figur 4 verwiesen, in welchem ein Sequenz- bzw. Interaktionsdiagramm dargestellt ist.

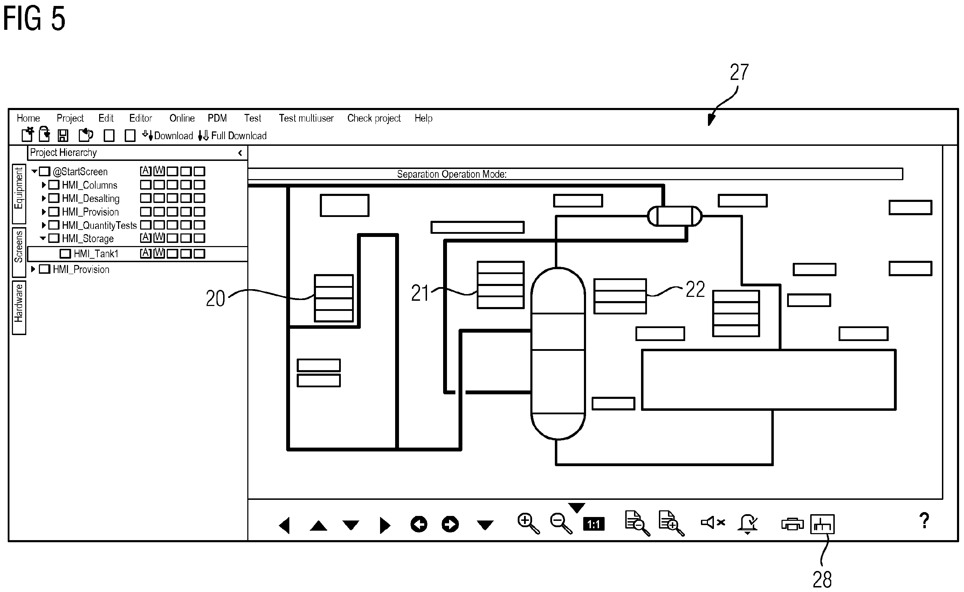

Es wird angenommen, dass der Operator-Client 5 zur Aktualisierung der Blocksymbole 20, 21, 22 (Figuren 3 und 5) eines Anlagenbildes 27 sich an dem zweiten Operator-Server 2 angemeldet hat, der aufgrund dieser Anmeldung als lokaler Server 2 und der erste Operator-Server 1 als Remote-Server 1 fungiert.

Ferner wird angenommen, dass der auf dem Remote-Server 1 hinterlegte Prozessabbild-Baustein 12, welcher auf dem Operator-Client 5 durch das Blocksymbol 20 repräsentiert wird, drei so genannte Tags aufweist. Ein Tag umfasst gewöhnlich die Adresse eines Prozessabbild-Bausteins eines Prozessobjektes im Prozessabbild eines Servers sowie einen dazugehörigen Prozesswert. Der auf dem Remote-Server 1 hinterlegte Prozessabbild-Baustein 13, der das Blocksymbol 21 repräsentiert weist dagegen zwei Tags auf. Ferner ist der Prozessabbild-Baustein 15 des lokalen Servers 2 mit zwei Tags versehen, wobei durch den Prozessabbild-Baustein 15 das Blocksymbol 22 repräsentiert wird.

Zur besseren Veranschaulichung und der Einfachheit halber sind die Tags der Prozessabbild-Bausteine 12, 13, 15 in der Figur 3 mit Bezugszeichen 20a, 20b, 20c, 21a, 21b, 22a, 22b der Blocksymbole 20, 21, 22 angedeutet.

Zur Aktualisierung der Blocksymbole 20, 21, 22 übermittelt ein User-Interface 100 des Operator-Clients 5 einer Software-Laufzeitkomponente 101 des lokalen Servers 2 eine Anweisung 102, beispielsweise in Form einer Anweisung "Anlagenbild öffnen". Aufgrund dieser Anweisung 102 greift die Software-Laufzeitkomponente 101 auf eine auf dem lokalen Server 2 hinterlegte Datenstruktur 103 des Anlagenbildes 27 zu, was in der Figur 4 mittels des Bezugszeichens 104 dargestellt ist. Die Datenstruktur 103 weist so genannte Screenitems auf, die gewöhnlich die Tag-Adressen der Blocksymbole, Daten zur Kennzeichnung, Beschreibung und Positionierung von Bildobjekten im Anlagenbild 27 sowie weitere zur Darstellung des Anlagenbildes 27 erforderliche Daten auf dem jeweiligen Operator-Client umfassen. Zur Aktualisierung der Blocksymbole 20, 21, 22 ist es ausreichend, lediglich die Datenstruktur 103 für Screenitems vom Typ "Blocksymbole" zu "durchlaufen", um für die Blocksymbole 20, 21, 22 die entsprechenden Tag-Adressen für die Prozessabbild-Bausteine 11, 12, 15 auszulesen, was in der Figur 4 durch ein Bezugszeichen 105 angedeutet ist. In einem nächsten Schritt 106 ermittelt bzw. zählt die Software-Laufzeitkomponente 101 des lokalen Servers 2 die Anzahl der Tags oder die Anzahl der Tag-Adressen der Prozessabbild-Bausteine 11, 12, 14, wobei die Software-Laufzeitkomponente 101 im vorliegenden Ausführungsbeispiel erkennt, dass fünf Tags bzw. Tag-Adressen das Prozessabbild 11 des Remote-Servers 1 und zwei Tags bzw. Tag-Adressen das Prozessabbild 14 des Remote-Servers 2 betreffen. Dies bedeutet, dass im Rahmen der aktuellen Client-Server-Verbindung zwischen dem Operator-Client 5 und dem lokalen Server 2 eine hohe Querkommunikation zwischen dem lokalen Server 2 und dem Remote-Server 1 erforderlich ist, um durch den lokalen Server 2 dem Operator-Client 5 alle Prozessdaten - also die Prozessdaten sowohl des lokalen Servers 2 als auch die des Remote-Servers 1 - bereitzustellen. Die Tags bzw. Tag-Adressen werden in einem weiteren Schritt 107 einem Laufzeitsystem zugeführt, welches das Prozessabbild 14 und eine Ereignismanagement-Komponente 108 des lokalen Servers 2 umfasst. Aufgrund dieser Tags bzw. Tag-Adressen ist das Laufzeitsystem 14, 108 in der Lage, die in den Prozessabbild-Bausteinen 11, 12, 14 hinterlegten Prozesswerte den diesen Bausteinen entsprechenden Blocksymbolen 20, 21, 22 zu übermitteln, wodurch diese Blocksymbole mit aktuellen Prozesswerten versorgt werden, wobei das Laufzeitsystem 14, 108 Prozesswertänderungen dem User-Interface 100 übermittelt (Bezugszeichen 109).

Aufgrund dessen, dass die Software-Laufzeitkomponente 101 erkennt, dass fünf Tags bzw. Tag-Adressen das Prozessabbild 11 des Remote-Servers 1 und zwei Tags bzw. Tag-Adressen das Prozessabbild 14 des Remote-Servers 2 betreffen, schlägt die Software-Laufzeitkomponente 101 des lokalen Servers 2 dem Operator-Client 5 eine neue Client-Server-Verbindung vor (Bezugszeichen 110). Im vorliegenden Ausführungsbeispiel wird vorgeschlagen, dass der Operator-Client 5 sich im Folgenden an dem Remote-Server 1 anmelden soll, wobei einem Operator bzw. einem Benutzer des Operator-Clients 5 der Vorschlag angezeigt wird. Für den Fall, dass der Operator-Client 5 sich im Folgenden an dem Remote-Server 1 anmeldet, fungiert dieser als neuer lokaler Server 1, der "alte" lokale Server 2 fungiert als neuer Remote-Server. Die Auswertungen bezüglich der günstigsten Client-Server-Verbindung übernehmen in diesem Fall eine Laufzeitkomponente 111 des Operator-Servers 1 (neuer lokaler Server) und ein Laufzeitsystem dieses Operator-Servers 1, welches das Prozessabbild 11 und ein Ereignismanagement-System 112 umfasst.

Wie erläutert, erkennt im vorliegenden Ausführungsbeispiel der lokale Server 2, dass zur Aktualisierung der Blocksymbole 20, 21, 22 mit den aktuellen Prozessdaten, die Verbindung zwischen dem Operator-Client 5 und dem Remote-Server 1 im Hinblick auf die Kommunikationslast zwischen den Servern 1, 2 am günstigsten ist. In diesem Fall sind lediglich die wenigen Prozesswerte des Prozessabbild-Bausteins 15 durch den Operator-Server 2 dem Operator-Server 1 zu übermitteln (in Figur 2 mittels eines schmalen Kommunikationsbalkens 25 dargestellt), um diese Prozesswerte und die aktuellen Prozesswerte seiner Prozessabbild-Bausteine 12, 13 dem Operator-Client 5 bereitstellen bzw. zuführen zu können, (in Figur 2 mittels eines breiten Kommunikationsbalkens 26 angedeutet).

Der lokale Server 2, an welchem der Operator-Client 5 sich angemeldet hat, benachrichtigt den Operator-Client 5 über die günstigere Client-Server-Verbindung bzw. darüber, dass eine günstigere Client-Server-Verbindung aufgebaut werden kann. Dabei wird in dem auf dem Operator-Client 5 dargestellten Anlagenbild 27 (Figur 5), welches die Blocksymbole 20, 21, 22, weitere Blocksymbole, Bildsymbole zur Darstellung von Anlagenkomponenten und eingeblendeten Faceplates umfasst, ein Symbol 28 angezeigt, die einen Operator darauf hinweist, dass im Hinblick auf einer geringeren Querkommunikationslast zwischen den Servern eine günstigere Client-Server-Verbindung aufgebaut werden. Nach einer vorgegebenen Zeitspanne oder nach einer entsprechenden Operator-Eingabe am Operator-Client 5 wird schließlich diese günstigere Client-Server-Verbindung aufgebaut, wobei in beiden Fällen der Operator-Client 5 sich am Remote-Server 1 anmeldet, welcher daraufhin als (neuer) lokaler Server fungiert. Nach dieser Anmeldung werden die Prozesswerte des Prozessabbild-Bausteins 15 (Figur 2) durch den zweiten Operator-Server 2 (alter lokaler Server 2, neuer Remote-Server 2) dem ersten Operator-Server 1 (neuer lokaler Server 1, alter Remote-Server 1) übermittelt, welcher diese Prozesswerte und die aktuellen Prozesswerte seiner Prozessabbild-Bausteine 12, 13 dem Operator-Client 5 bereitstellt bzw. zuführt.

Im Folgenden wird davon ausgegangen, dass die günstigere Client-Server-Verbindung nach einer geeigneten Operator-Eingabe aufgebaut wird.

Eine geeignete Operator-Eingabe kann z. B. in der Art und Weise bewerkstelligt werden, indem der Operator das Symbol 28 mittels einer "Maus" betätigt bzw. anwählt, wodurch sich ein dynamisch zusammengestelltes Verbindungsbild öffnet, in welchem die aktuelle Verbindungssituation mit den entsprechenden Kommunikationsbalken dargestellt und die evaluierte und günstigere Verbindung angezeigt wird.

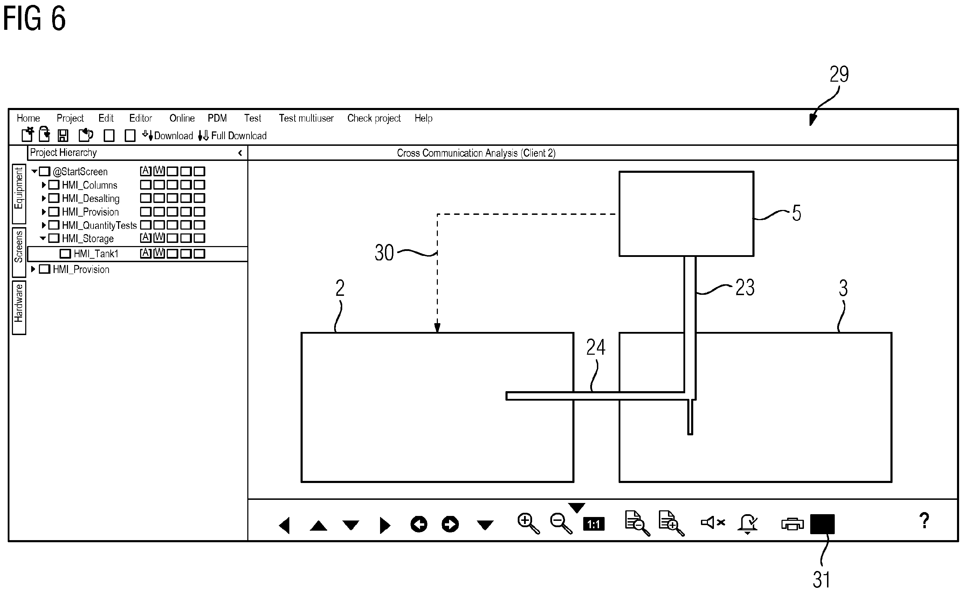

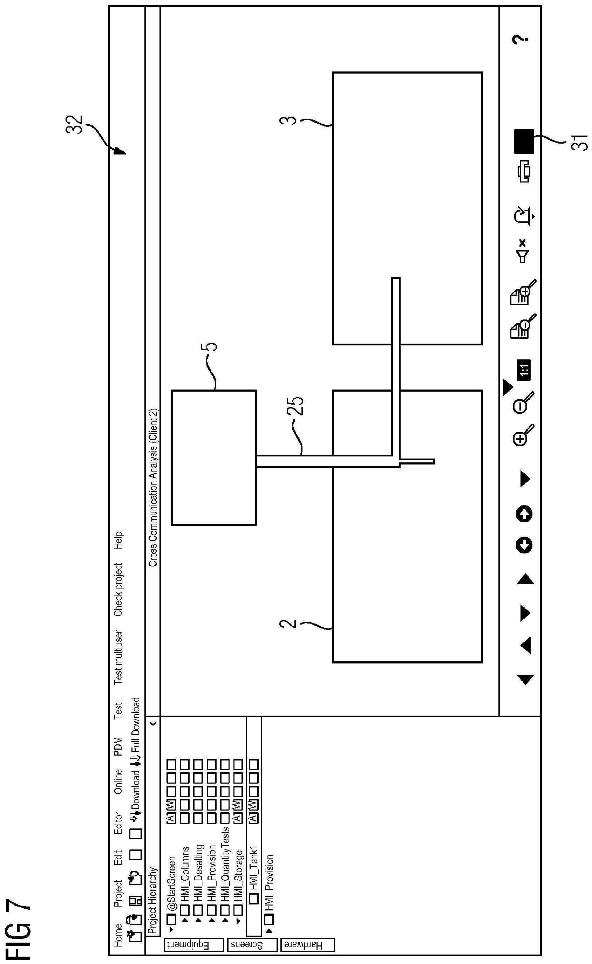

Die Figuren 6 und 7 zeigen jeweils ein derartiges auf dem Operator-Client 5 darstellbares Verbindungsbild, wobei im Folgenden der Einfachheit halber für die in den Figuren 6 und 7 vorkommenden, die Operator-Server 1, 2 und den Operator-Client 5 repräsentierenden Bildkomponenten die gleichen Bezugszeichen verwendet werden. In Figur 6 wird einem Operator in einem Verbindungsbild 29 mittels einer gestrichelten Linie bzw. eines Pfeils 30 die günstigere Verbindung angezeigt, wobei die Darstellung im Verbindungsbild 29 selbstverständlich auf die Operator-Server 1, 2 und den Operator-Client 5 für die Ist-Verbindung- und Vorschlags-Verbindung (gestrichelten Linie 30) beschränkt ist.

Für den Fall, dass der Operator sich für die vorgeschlagene günstigere Verbindung entscheidet, so kann er diese aktivieren, indem er ein Symbol 31 im Verbindungsbild 29 selektiert. Ist die Umschaltung erfolgt, was bedeutet, dass der Operator-Client 5 sich am Operator-Server 1 angemeldet hat, wird die neue Client-Server-Verbindung in einem weiteren Verbindungsbild 32 (Figur 7) visualisiert. Für den Fall, dass der Operator das Symbol 31 nochmals anwählt, meldet sich der Operator-Client 5 wieder am Operator-Server 2 an und das ursprüngliche Verbindungsbild 29 wird wieder eingeblendet.

Die durch den Operator manuell eingeleitete Umschaltung kann selbstverständlich automatisch erfolgen, so dass beispielsweise auf der Grundlage einer statistischen Bewertung der Bild-Anstehzeiten unterschiedlicher Operatoren ("wie lange hat welcher Operator welches Bild geöffnet?") eine geeignete Serveranwahl bereits bei der Anmeldung des Operators abgeleitet werden kann.

## Patentansprüche

1. Anordnung mit Operator-Servern (1, 2) und Operator-Clients (4, 5, 6), wobei
- in den Operator-Servern (1, 2) jeweils zu Prozessobjekten gehörige, Tags aufweisende Prozessabbild-Bausteine (12, 13, 15) in einem Prozessabbild (11, 14) hinterlegt sind,
- der Operator-Server (2), an welchem sich einer der Operator-Clients anmeldet, als lokaler Server (2) fungiert und die anderen Operator-Server (1) als Remote-Server (1) fungieren,
- der lokale Server (2) die in den Remote-Servern (1) hinterlegten Tags empfängt,
- jeder der Operator-Clients (4, 5, 6) dazu ausgebildet ist, zum Aufbau einer Client-Server-Verbindung sich an einem der Operator-Server (1, 2) anzumelden und ferner dazu ausgebildet ist, ein Anlagenbild (27) mit zu den Prozessobjekten gehörigen Blocksymbolen (20, 21, 22) darzustellen,
- zur Aktualisierung der Blocksymbole (20, 21, 22) des Anlagenbildes (27) der lokale Server (2) dem angemeldeten Operator-Client (5) über die Client-Server-Verbindung die Prozessdaten des lokalen (2) und die Prozessdaten der Remote-Server (1) übermittelt,
**dadurch gekennzeichnet, dass** der als lokaler Server (2) fungierende Operator-Server (2) für die jeweiligen Blocksymbole (20, 21, 22) aus mindestens einer Datenstruktur des Anlagenbildes (27) die Tags oder die Tag-Adressen der Prozessabbild-Bausteine (12, 13, 15) sowie die Anzahl der Tags oder der Tag-Adressen des jeweiligen Prozessabbild-Bausteins (12, 13, 15) ermittelt, wobei der lokale Server (2) dem angemeldeten Operator-Client (5) in Abhängigkeit der Anzahl der Tags oder der Tag-Adressen eine neue Client-Server-Verbindung vorschlägt.

2. Anordnung nach Anspruch 1, **dadurch gekennzeichnet, dass** der angemeldete Operator-Client (5) in Abhängigkeit der Anzahl nach einer vorgegebenen Zeitspanne oder nach einer Operator-Eingabe sich an einem der Remote-Server (1) zum Aufbau einer neuen Client-Server-Verbindung anmeldet, welcher nach der Anmeldung als neuer lokaler Server (1) fungiert.

3. Anordnung nach Anspruch 1 oder 2, **dadurch gekennzeichnet, dass** die Client-Server-Verbindungen auf dem angemeldeten Operator-Client (5) visualisierbar sind.

4. Prozessleitsystem mit einer Anordnung nach einem der Ansprüche 1 bis 3.

## Claims

1. Arrangement with operator servers (1, 2) and operator clients (4, 5, 6), wherein
- process image modules (12, 13, 15) associated in each case with process objects and having tags are stored in the operator servers (1, 2) in a process image (11, 14),
- the operator server (2), with which one of the operator clients registers, functions as a local server (2) and the other operator server (1) as a remote server (1),
- the local server (2) receives the tags stored in the remote servers (1),
- each of the operator clients (4, 5, 6) is embodied to register with one of the operator servers (1, 2) in order to establish a client-server connection, and is also embodied to display a system image (27) with block symbols (20, 21, 22) associated with the process objects,
- to update the block symbols (20, 21, 22) of the system image (27) the local server (2) transmits the process data of the local (2) and the process data of the remote server (1) to the registered operator client (5) by way of the client-server connection,
**characterised in that** the operator server (2) functioning as a local server (2) determines for the respective block symbols (20, 21, 22) from at least one data structure of the system image (27) the tags or the tag addresses of the process image modules (12, 13, 15) and the number of tags or tag addresses of the respective process image module (12, 13, 15), wherein the local server (2) proposes a new client-server connection to the registered operator client (5) as a function of the number of tags or tag addresses.

2. Arrangement according to claim 1, **characterised in that** as a function of the number after a predetermined time span or after an operator input, the registered operator client (5) registers with one of the remote servers (1) for establishing a new client-server connection which functions as a new local server (1) after the registration.

3. Arrangement according to claim 1 or 2, **characterised in that** the client-server connections can be visualised on the registered operator client (5).

4. Process control system with an arrangement according to one of claims 1 to 3.

## Revendications

1. Système comprenant des serveurs opérateurs (1, 2) et des clients opérateurs (4, 5, 6), dans lequel
- des modules (12, 13, 15) de reproduction de processus appartenant respectivement à des objets de processus et ayant des étiquettes sont mis dans une reproduction (11, 14) de processus dans les serveurs opérateurs (1, 2),
- le serveur opérateur (2), auquel s'annonce l'un des clients opérateurs, sert de serveur (2) local et les autres serveurs opérateurs (1) servent de serveurs (1) à distance,
- le serveur (2) local reçoit les étiquettes mises dans les serveurs (1) à distance,
- chacun des clients opérateurs (4, 5, 6) est constitué pour s'annoncer en vue de l'établissement d'une liaison client-serveur à l'un des serveurs opérateurs (1, 2) et est constitué en outre pour représenter une image (27) d'installation par des symboles blocs (20, 21, 22) appartenant aux objets de processus,
- pour la mise à jour des symboles blocs (20, 21, 22) de l'image (27) d'installation, le serveur (2) local transmet au clientopérateur (5) annoncé par la liaison client-serveur les données de processus du serveur (2) local et les données de processus des serveurs (1) à distance,
**caractérisé en ce que** le serveur opérateur (2) servant de serveur (2) local détermine pour les symboles blocs (20, 21, 22) respectif à partir d'au moins une structure de données de l'image (27) d'installation, les étiquettes ou les adresses d'étiquette des modules (12, 13, 15) de reproduction de processus ainsi que le nombre des étiquettes ou des adresses d'étiquette du module (12, 13, 15) respectif de reproduction de processus, le serveur (2) local proposant une nouvelle liaison client-serveur au client opérateur (5) annoncé en fonction du nombre des étiquettes ou des adresses d'étiquette.

2. Système suivant la revendication 1, **caractérisé en ce que** le client opérateur (5) annoncé s'annonce pour l'établissement d'une nouvelle liaison client-serveur à l'un des serveurs (1) à distance en fonction du nombre après un laps de temps donné à l'avance ou après une entrée d'opérateur, lequel sert après la demande de nouveau serveur (1) local.

3. Système suivant la revendication 1 ou 2, **caractérisé en ce que** les liaisons client-serveur peuvent être visualisées sur le client opérateur (5) annoncé.

4. Système de gestion de processus ayant un système suivant l'une des revendications 1 à 3.
